# EUROPEAN PATENT SPECIFICATION

(11) **EP 3 608 513 B1**
(45) Date of publication and mention of the grant of the patent: **03.05.2023**
(21) Application number: 19190129.7
(22) Date of filing: 05.08.2019
(51) Int. Cl.: F01D 11/08, F01D 25/24

(54) **BLADE OUTER AIR SEAL REINFORCEMENT LAMINATE**
VERSTÄRKUNGSLAMINAT FÜR ÄUSSERE LUFTDICHTUNG EINER SCHAUFEL
STRATIFIÉ DE RENFORCEMENT DE JOINT D'AIR EXTÉRIEUR D'AUBE

(30) Priority: 06.08.2018 US 201816055636
(43) Date of publication of application: 12.02.2020
(73) Proprietor: Raytheon Technologies Corporation, Farmington, CT 06032 (US)
(72) Inventor: BARKER, William M., North Andover, MA Massachusetts 01845 (US); CLARK, Thomas E., Sanford, ME Maine 04073 (US); WHITNEY, Daniel J., East Waterloo, ME 04030 (US)
(74) Representative: Dehns

(56) References cited:
- EP-A1- 2 589 774
- EP-A1- 3 106 620
- EP-A1- 3 255 252
- US-A1- 2009 010 755

## Description

### BACKGROUND

This application relates to a gas turbine engine with a balde outer air seal having unique structure, and a method of providing a gas turbine engine.

Gas turbine engines are known and typically include a compressor compressing air and delivering it into a combustor. The air is mixed with fuel in the combustor and ignited. Products of the combustion pass downstream over turbine rotors, driving them to rotate.

It is desirable to ensure that the bulk of the products of combustion pass over turbine blades on the turbine rotor. As such, it is known to provide blade outer air seals radially outwardly of the blades.

Blade outer air seals have been proposed made of ceramic matrix composite fiber layers.

EP 2 589 774 A1 discloses a prior art gas turbine engine as set forth in the preamble of claim 1.

US 2009/010755 A1 discloses a prior art ceramic matrix composite attachment apparatus and method.

EP 3 255 252 A1 discloses a prior art blade outer air seal made of ceramic matrix composite.

### SUMMARY

From a first aspect, there is provided a gas turbine engine as recited in claim 1.

There is also provided a method of providing the gas turbine engine of claim 1, as recited in claim 6.

Features of embodiments of the invention are set forth in the dependent claims.

These and other features may be best understood from the following drawings and specification.

### BRIEF DESCRIPTION OF THE DRAWINGS

Figure 1 schematically shows a gas turbine engine.
Figure 2 shows a turbine section.
Figure 3A is a cross-sectional view through a blade outer air seal.
Figure 3B shows an alternative.
Figure 4A shows a first method step.
Figure 4B shows a subsequent step.
Figure 5 shows an embodiment.
Figure 6 shows an alternative embodiment.

### DETAILED DESCRIPTION

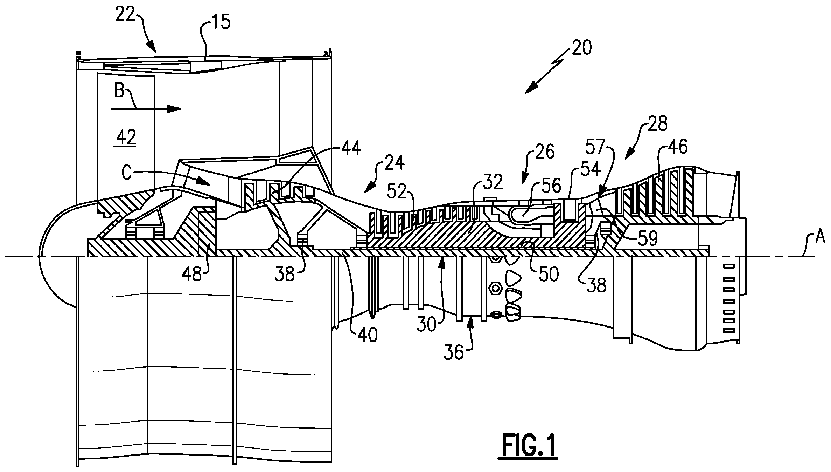

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 R)]^{0.5}. The "Low corrected fan tip speed" as disclosed herein according to one non-limiting embodiment is less than about 1150 ft / second (350.5 meters/second).

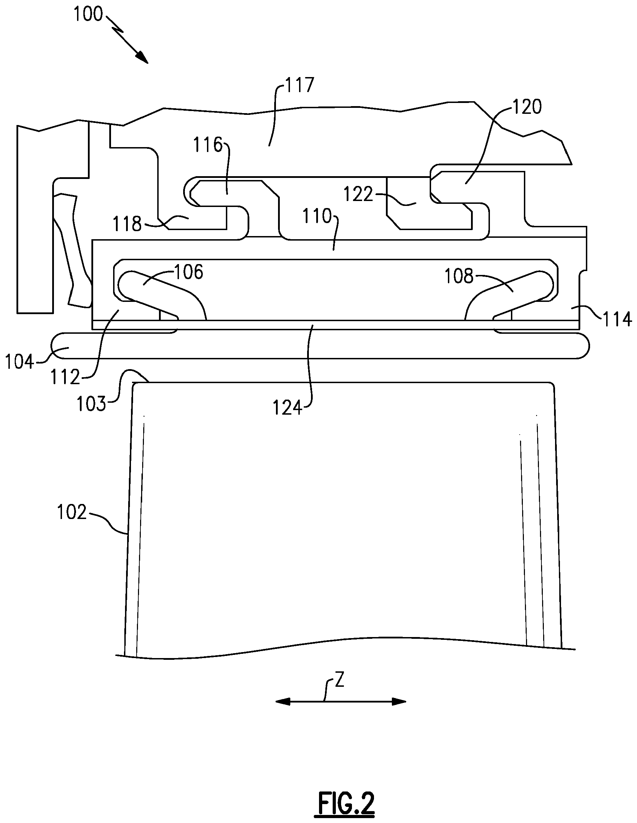

Figure 2 shows a turbine section 100, which may be incorporated into a gas turbine engine such as the one shown in Figure 1. However, it should be understood that the turbine section 100 could be utilized in other gas turbine engines, and even gas turbine engines not having a fan section at all.

A turbine blade 102 has a radially outer tip 103 that is spaced from a blade outer air seal ("BOAS") 104. The BOAS may be formed of a ceramic matrix composite ("CMC"). A forward hook 106 and an aft hook 108 are formed on the BOAS 104. A support block 110 includes a rearwardly facing forward hook 112 supporting forward hook 106 and a forwardly facing aft hook 114 supporting aft hook 108.

As shown, the attachment block 110 is supported on a static support or engine case 117. Case 117 has a rearwardly facing forward hook 118 supporting forwardly facing forward hook 116 of the attachment block 110. The case 117 has a rearwardly facing aft hook 122 supporting a forwardly facing aft hook 120 on the attachment block. Case 117 may extend for a full 360° about a rotational axis Z of blade 102.

It should be understood that the arrangement of the hooks 118 and 120 and 116 and 118 could be reversed such that hooks 118 and 122 face forwardly and hooks 116 and 120 face rearwardly. However, in one aspect of this disclosure, the hooks 116 and 120 face in a common axial direction and the hooks 118 and 122 face in an opposed axial direction.

A wedge seal 124 can also be seen.

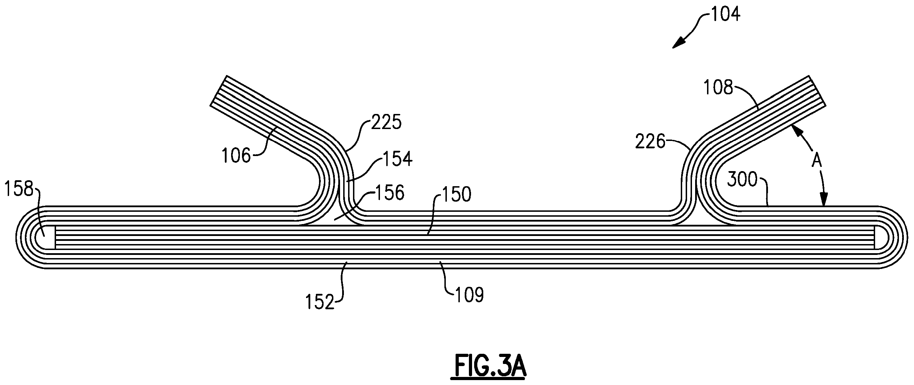

Figure 3A shows the BOAS 104 having hooks 106 and 108 and a central web 109.

The BOAS 104 is formed of a ceramic matrix composite ("CMC") material. The BOAS is formed of a plurality of CMC laminates. The laminates may be silicon carbide fibers, formed into a woven fabric in each layer. The fibers may be coated by a boron nitride.

Generally in the prior art there have been only a few laminate in a central web 109. In this disclosure there are additional laminate. The BOAS 104 is shown to have a central reinforcement laminate 150 including a plurality of layers. An overwrap 152 also includes a plurality of layers or laminates, and spans a central web 109 which is defined axially between hooks 106 and 108, and axially outwardly of both hooks. The overwrap layer 152 also extends back to form a radially inner portion of the hooks 106 and 108. A hook backing portion 154 is secured to the overwrap portion 152 to complete the hooks 106 and 108. Spaces 156 and 158 are filled with loose fibers, as will be explained in more detail below.

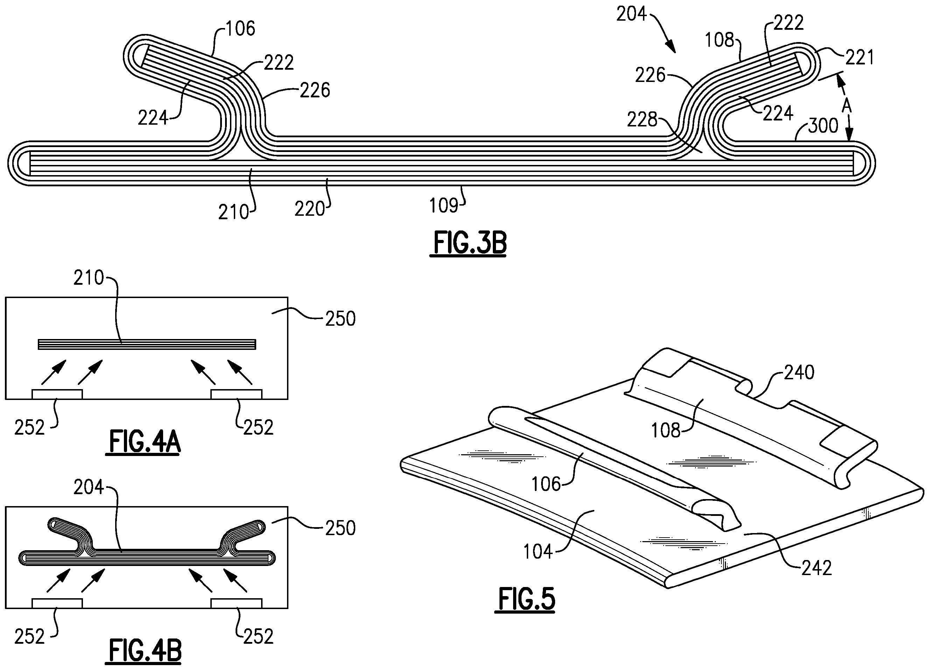

Figure 3B shows an embodiment 204. As shown, there are central reinforcement laminate 210 and outer overwrap plies 220. There are hook reinforcement plies 222 extending across the web 109 and into each of the hook areas. There are also inner front end aft plies 224 forming radially inner portions of the hooks 106 and 108.

Each of structures 150/152/154/210/220/224 and 224 are shown to include plural layers or laminates.

The use of several laminates in the web 109 provides benefits. However, it is generally desirable to add additional material to make the laminates more stiff than their free woven fiber state. Thus, a process known as densification is utilized to increase the density of the laminate material after assembly. If too many laminate are formed in the central web, the radially more central laminate may not be adequately densified.

Thus, as shown in Figure 4A the reinforcement plies in member 210 may be initially stiffened in a densification chamber 250 as a separate densification process. Injectors 252 are schematically shown which inject materials such, as a silicon carbide matrix material, into spaces between the fibers in the woven layers. This may be utilized in the Figure 4A step to provide 100% of the desired densification, or only some percentage. As an example, this initial step may be utilized to form between 10 and 90% of a desired densification.

In another method, the Figure 4A step could be eliminated, and the entire densification process occur in a single step.

One hundred percent densification may be defined as the layers being completely saturated with the matrix and about the fibers. One hundred percent densification may be defined as the theoretical upper limit of layers being completely saturated with the matrix and about the fibers, such that no additional material may be deposited. In practice, 100% may be difficult to achieve in practice.

As shown in Figure 4B, the entire BOAS 204 is then formed with the additional layers, and having the overwrap plies 220 wrapping over the hook portions 222/224 and the reinforcement portion 210, and then additional densification occurs to all of these areas.

The same Figure 4A/4B process may be useful for the Figure 3A BOAS.

Returning to Figures 3 and 3B, spaces 158/156 and 228 between the laminates are filled with loose fibers, and in the densification process these will also be densified to harden.

In addition, it can be seen that the hooks 106 and 108 do not extend in a direction which is perpendicular to the vertical, or parallel to the axis of rotation Z (see Figure 2). Rather, the angle A is at some intermediate angle between 20 and 70 degrees relative to an upper surface 300 of the BOAS, and radially inward of the hook.

The angle A is measured from an averaged position along the hook measured relative to an axis taken parallel to the rotational axis. That is, in practice the hook may not extend along any straight line.

The angle A is between 20 and 70 degrees. Outer surface 226 of hooks 106/108 are curved, not sharp cornered. This positioning facilitates the assembly of the BOAS, as will be explained below.

Figure 5 shows BOAS 104 having hooks 106 with 108 and a notch 240 that will catch on a tab on an attachment block to resist rotation.

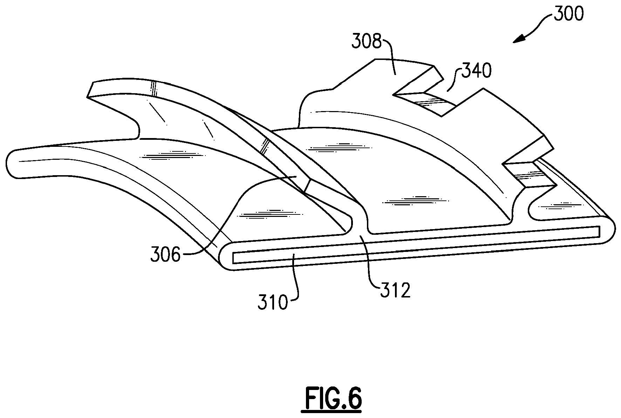

BOAS 300 as shown in Figure 6 has its hooks 306 and 308 extending circumferentially to the edges 312. The reinforcement layer 310 is shown in this figure.

BOAS formed according to this disclosure provide beneficial operation due to the additional stiffness from the reinforcement layer. Options such as the predensification of Figure 4A ensure that the central web will be of a desired rigidity, which might not occur if the inner layers were not adequately densified.

A method of forming a blade outer air seal could be said to include the steps providing an inner reinforcement member formed of a plurality of layers fibrous woven structure. A Ceramic Matrix material is injected into the fibrous woven structure and about fibers within the fibrous woven structure. Outer overwrap layers are wrapped around the inner reinforcement member. A densification matrix about fibers is injected in the fibrous woven overwrap structure.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine (20) comprising:
a compressor section (24) and a turbine section (28), said turbine section (28) including at least one rotor and at least one blade (102) extending radially outwardly from said rotor to a radially outer tip (103);
a blade outer air seal (104; 300) positioned radially outwardly of said radially outer tip (103) of said blade (102), said blade outer air seal (104; 300) having forward and aft hooks (106, 108; 306, 308), and said forward and aft hooks (106, 108; 306, 308) being supported on forward and aft seal hooks (112, 114) of an attachment block (110); and
said blade outer air seal (104; 300) formed of a plurality of laminate layered with a central web (109) formed of a plurality of laminate members including an inner reinforcement member (150) including a plurality of layers, and an outer overwrap (152) that wraps around said inner reinforcement member (150), wherein said plurality of laminate members have a fibrous woven structure;
wherein:
an angle (A) is defined between said forward and aft hooks (106, 108; 306, 308) and a portion of said blade outer air seal (104; 300) radially inwardly of said forward and aft hooks (106, 108; 306, 308) measured from an averaged position along said hooks (106, 108; 306, 308) measured relative to an axis taken parallel to a rotational axis (Z) of the blade (102), and said angle (A) being between 20 and 70 degrees; and
there are spaces (156, 158; 228) between said laminate,
**characterised in that**:
loose fibers are received within said spaces (156, 158; 228) wherein
the loose fibers and the laminate are embedded in a densification matrix.

2. The gas turbine engine as set forth in claim 1, wherein said outer overwrap (152) extends radially outwardly to said forward and aft hooks (106, 108; 306, 308).

3. The gas turbine engine as set forth in claim 1 or 2, wherein there are hook plies positioned to further define each of said hooks (106, 108; 306, 308), and radially outward of said inner reinforcement member (150).

4. The gas turbine engine as set forth in any preceding claim, wherein said fibrous woven structure includes silicon carbide fibers, and the densification matrix is a silicon carbide matrix received about said fibers and within said woven structure.

5. The gas turbine engine as set forth in claim 4, wherein spaces (156, 158; 228) between said laminate contain fibers embedded in said silicon carbide matrix.

6. A method of providing the gas turbine engine of claim 1, wherein forming the blade outer air seal (104; 300) comprises the steps of:
(a) providing an inner reinforcement member (150) formed of a plurality of layers having a fibrous woven structure;
(b) injecting a densification material into said fibrous woven structure and about fibers within said fibrous woven structure; then
(c) wrapping outer overwrap layers (152) around said inner reinforcement member (150); and then
(d) injecting a densification matrix about fibers in said fibrous woven overwrap structure (152),
wherein spaces (156, 158; 228) are filled with loose fiber, and said densification matrix is injected into said loose fibers in said spaces (156, 158; 228).

7. The method as set forth in claim 6, wherein said fibrous woven structure includes silicon carbide fibers, and said densification matrix is a silicon carbide matrix.

8. The method as set forth in claim 6 or 7, wherein hook plies are positioned on said inner reinforcement member (150), and said overwrap member (152) wrapping around said hook plies, before step (d).

## Patentansprüche

1. Gasturbinentriebwerk (20), umfassend:
einen Verdichterabschnitt (24) und einen Turbinenabschnitt (28), wobei der Turbinenabschnitt (28) mindestens einen Rotor und mindestens eine Laufschaufel (102) beinhaltet, die sich radial auswärts von dem Rotor zu einer radial äußeren Spitze (103) erstreckt;
eine äußere Laufschaufelspaltdichtung (104; 300), die radial auswärts von der radial äußeren Spitze (103) der Laufschaufel (102) positioniert ist, wobei die äußere Laufschaufelspaltdichtung (104; 300) einen vorderen und einen hinteren Haken (106, 108; 306, 308) aufweist, und wobei der vordere und der hintere Haken (106, 108; 306, 308) auf einem vorderen und einem hinteren Dichtungshaken (112, 114) eines Befestigungsblocks (110) abgestützt sind; und
wobei die äußere Laufschaufelspaltdichtung (104; 300) aus einer Vielzahl von Laminat ausgebildet ist, das mit einer zentralen Bahn (109) beschichtet ist, die aus einer Vielzahl von Laminatelementen ausgebildet ist, die ein inneres Verstärkungselement (150) beinhaltet, das eine Vielzahl von Schichten beinhaltet, und eine äußere Umhüllung (152), die sich um das innere Verstärkungselement (150) wickelt, wobei die Vielzahl von Laminatelementen eine faserige gewebte Struktur aufweist;
wobei:
ein Winkel (A) zwischen dem vorderen und dem hinteren Haken (106, 108; 306, 308) und einem Abschnitt der äußeren Laufschaufelspaltdichtung (104; 300) radial einwärts von dem vorderen und dem hinteren Haken (106, 108; 306, 308) definiert ist, der von einer gemittelten Position entlang der Haken (106, 108; 306, 308) gemessen wird, die relativ zu einer parallel zu einer Rotationsachse (Z) der Laufschaufel (102) verlaufenden Achse gemessen wird, und wobei der Winkel (A) zwischen 20 und 70 Grad beträgt; und
es Zwischenräume (156, 158; 228) zwischen dem Laminat gibt, **dadurch gekennzeichnet, dass**:
lose Fasern innerhalb der Zwischenräume (156, 158; 228) aufgenommen werden, wobei
die losen Fasern und das Laminat in eine Verdichtungsmatrix eingebettet sind.

2. Gasturbinentriebwerk nach Anspruch 1, wobei sich die äußere Umhüllung (152) radial auswärts zu dem vorderen und dem hinteren Haken (106, 108; 306, 308) erstreckt.

3. Gasturbinentriebwerk nach Anspruch 1 oder 2, wobei es Hakenlagen gibt, die positioniert sind, um jeden der Haken (106, 108; 306, 308) weiter zu definieren, und die radial auswärts von dem inneren Verstärkungselement (150) liegen.

4. Gasturbinentriebwerk nach einem der vorhergehenden Ansprüche, wobei die faserige gewebte Struktur Siliziumkarbidfasern beinhaltet und die Verdichtungsmatrix eine Siliziumkarbidmatrix ist, die um die Fasern herum und innerhalb der gewebten Struktur aufgenommen ist.

5. Gasturbinentriebwerk nach Anspruch 4, wobei Zwischenräume (156, 158; 228) zwischen dem Laminat Fasern enthalten, die in die Siliziumkarbidmatrix eingebettet sind.

6. Verfahren zum Bereitstellen des Gasturbinentriebwerks nach Anspruch 1, wobei das Ausbilden der äußeren Laufschaufelspaltdichtung (104; 300) die folgenden Schritte umfasst:
(a) Bereitstellen eines inneren Verstärkungselements (150), das aus einer Vielzahl von Schichten mit einer faserigen gewebten Struktur ausgebildet ist;
(b) Einspritzen eines Verdichtungsmaterials in die faserige gewebte Struktur und um Fasern innerhalb der faserigen gewebten Struktur; danach
(c) Umwickeln äußerer Umhüllungsschichten (152) um das innere Verstärkungselement (150); und danach
(d) Einspritzen einer Verdichtungsmatrix um Fasern in der faserigen gewebten Umhüllungsstruktur (152),
wobei Zwischenräume (156, 158; 228) mit losen Fasern gefüllt werden und die Verdichtungsmatrix in die losen Fasern in den Zwischenräumen (156, 158; 228) eingespritzt wird.

7. Verfahren nach Anspruch 6, wobei die faserige gewebte Struktur Siliziumkarbidfasern beinhaltet und die Verdichtungsmatrix eine Siliziumkarbidmatrix ist.

8. Verfahren nach Anspruch 6 oder 7, wobei vor Schritt (d) Hakenlagen auf dem inneren Verstärkungselement (150) positioniert werden und sich das Umhüllungselement (152) um die Hakenlagen wickelt.

## Revendications

1. Moteur à turbine à gaz (20) comprenant :
une section de compresseur (24) et une section de turbine (28), ladite section de turbine (28) comportant au moins un rotor et au moins une aube (102) s'étendant radialement vers l'extérieur depuis ledit rotor jusqu'à une pointe radialement externe (103) ;
un joint d'air extérieur d'aube (104 ; 300) positionné radialement vers l'extérieur de ladite pointe radialement externe (103) de ladite aube (102), ledit joint d'air extérieur d'aube (104 ; 300) ayant des crochets avant et arrière (106, 108 ; 306, 308), et lesdits crochets avant et arrière (106, 108 ; 306, 308) étant supportés sur des crochets d'étanchéité avant et arrière (112, 114) d'un bloc de fixation (110) ; et
ledit joint d'air extérieur d'aube (104 ; 300) étant formé d'une pluralité de stratifiés en couches avec une bande centrale (109) formée d'une pluralité d'éléments stratifiés comportant un élément de renforcement interne (150) comportant une pluralité de couches, et une surenveloppe externe (152) qui s'enroule autour dudit élément de renforcement interne (150), dans lequel ladite pluralité d'éléments stratifiés ont une structure tissée fibreuse ;
dans lequel :
un angle (A) est défini entre lesdits crochets avant et arrière (106, 108 ; 306, 308) et une partie dudit joint d'air extérieur d'aube (104 ; 300) radialement vers l'intérieur desdits crochets avant et arrière (106, 108 ; 306, 308) mesurée à partir d'une position moyenne le long desdits crochets (106, 108 ; 306, 308) mesurée par rapport à un axe pris parallèlement à un axe de rotation (Z) de l'aube (102), et ledit angle (A) étant compris entre 20 et 70 degrés ; et
il y a des espaces (156, 158 ; 228) entre ledit stratifié, **caractérisé en ce que** :
des fibres lâches sont reçues à l'intérieur desdits espaces (156, 158 ; 228) dans lequel
les fibres lâches et le stratifié sont noyés dans une matrice de densification.

2. Moteur à turbine à gaz selon la revendication 1, dans lequel ladite surenveloppe externe (152) s'étend radialement vers l'extérieur jusqu'auxdits crochets avant et arrière (106, 108 ; 306, 308) .

3. Moteur à turbine à gaz selon la revendication 1 ou 2, dans lequel il y a des nappes de crochet positionnées pour définir davantage chacun desdits crochets (106, 108 ; 306, 308), et radialement à l'extérieur dudit élément de renforcement interne (150).

4. Moteur à turbine à gaz selon une quelconque revendication précédente, dans lequel ladite structure tissée fibreuse comporte des fibres de carbure de silicium, et la matrice de densification est une matrice de carbure de silicium reçue autour desdites fibres et à l'intérieur de ladite structure tissée.

5. Moteur à turbine à gaz selon la revendication 4, dans lequel les espaces (156, 158 ; 228) entre ledit stratifié contiennent des fibres noyées dans ladite matrice de carbure de silicium.

6. Procédé de fourniture du moteur à turbine à gaz selon la revendication 1, dans lequel la formation du joint d'air extérieur d'aube (104 ; 300) comprend les étapes :
(a) de fourniture d'un élément de renforcement interne (150) formé d'une pluralité de couches ayant une structure tissée fibreuse ;
(b) d'injection d'un matériau de densification dans ladite structure tissée fibreuse et autour des fibres à l'intérieur de ladite structure tissée fibreuse ; ensuite
(c) d'enroulement de couches de surenveloppe externes (152) autour dudit élément de renforcement interne (150) ; et alors
(d) d'injection d'une matrice de densification autour des fibres dans ladite structure de surenveloppe tissée fibreuse (152),
dans lequel les espaces (156, 158 ; 228) sont remplis de fibres lâches, et ladite matrice de densification est injectée dans lesdites fibres lâches dans lesdits espaces (156, 158 ; 228).

7. Procédé selon la revendication 6, dans lequel ladite structure tissée fibreuse comporte des fibres de carbure de silicium, et ladite matrice de densification est une matrice de carbure de silicium.

8. Procédé selon la revendication 6 ou 7, dans lequel des nappes à crochets sont positionnées sur ledit élément de renforcement interne (150), et ledit élément de surenveloppe (152) s'enroulant autour desdites nappes de crochet, avant l'étape (d) .
